# EUROPÄISCHE PATENTSCHRIFT

(11) **EP 1 831 039 B1**
(45) Veröffentlichungstag und Bekanntmachung des Hinweises auf die Patenterteilung: **15.06.2011**
(21) Anmeldenummer: 05811243.4
(22) Anmeldetag: 01.12.2005
(51) Int. Cl.: B60G 17/015, B60G 21/055, B60G 21/10

(54) **AKTIVES FAHRWERKSTABILISIERUNGSSYSTEM**
ACTIVE CHASSIS STABILIZATION SYSTEM
SYSTEME DE STABILISATION ACTIF

(30) Priorität: 03.12.2004 DE 102004058441
(43) Veröffentlichungstag der Anmeldung: 12.09.2007
(73) Patentinhaber: TRW Automotive GmbH, 73553 Alfdorf (DE)
(72) Erfinder: KESSELGRUBER, Dirk, 56410 Montabaur (DE); HUNNICUTT, Harry, A., Austin, Texas 78745 (US)
(74) Vertreter: Prinz & Partner
(86) Internationale Anmeldenummer: PCT/EP2005/012842
(87) Internationale Veröffentlichungsnummer: WO 2006/058747

(56) Entgegenhaltungen:
- EP-A- 0 992 376
- EP-A- 1 175 307
- WO-A-03/101768
- WO-A-2005/072999
- DE-A1- 4 327 044
- DE-A1- 10 334 705
- DE-A1- 19 649 187
- US-A- 5 735 540

## Beschreibung

Die Erfindung betrifft ein aktives Fahrwerkstabilisierungssystem gemäß dem Oberbegriff des Anspruchs 1.

Aktive Fahrwerkstabilisierungssysteme werden von den meisten Kraftfahrzeugherstellern in einer wachsenden Zahl ihrer Modelle eingesetzt. Aufgrund der Nachfrage nach erhöhtem Fahrkomfort, einem gestiegenen Sicherheitsbedürfnis und immer ausgereifterer Sensorik werden aktive Fahrwerkstabilisierungssysteme zur Unterstützung der passiven Bauteile des Fahrwerks immer beliebter. Die passiven Bauteile wie Federelemente oder Dämpfer reagieren lediglich auf Lasten oder Kräfte die auf das Fahrzeug einwirken. In aktiven Fahrwerken sind üblicherweise hydraulische oder pneumatische Aktuatoren eingebaut, die mit den passiven Bauteilen des Fahrwerks gekoppelt sind. Diese Aktuatoren können einer Achse oder aber den einzelnen Rädern des Fahrzeugs zugeordnet sein. Die von verschiedenen Sensoren aufgenommenen Fahrzeugdaten werden durch die Fahrzeugelektronik in Betätigungssignale für die Aktuatoren umgewandelt. Diese beeinflussen dann aktiv das Verhalten des Fahrwerks entsprechend der jeweiligen Fahrsituation.

In der WO 03/101768 A1 ist ein Fahrwerkstabilisierungssystem nach dem derzeitigen Stand der Technik offenbart. Das dort beschriebene Fahrwerkstabilisierungssystem ordnet der Vorder- und Hinterachse jeweils einen hydraulischen Aktuator zu. Die Aktuatoren werden über eine integrierte Steuereinheit aktiviert, wobei die Steuereinheit die Schnittstelle zwischen der Fahrzeugsensorik und dem Hydraulikkreislauf des Fahrwerkstabilisierungssystems darstellt. Die integrierte Steuereinheit ist dabei ein kompaktes Bauteil, das sowohl alle Steuerventile des Hydraulikkreislaufs als auch die Elektronik zur Schaltung dieser Ventile aufnimmt.

In den derzeit bekannten Fahrwerkstabilisierungssystemen besteht die Möglichkeit, den Aktuator/die Aktuatoren der Vorderachse mit dem Aktuator/den Aktuatoren der Hinterachse parallel oder überkreuz zu schalten, wobei die Vorder-und Hinterachse immer mit demselben Druck angesteuert werden.

Das aktive Fahrwerkstabilisierungssystem wirkt Wankmomenten, d.h. Momenten um die Längsachse des Fahrzeugs, z.B. infolge Kurvenfahrt, entgegen. In einigen Ausführungsformen kann auch einem Fahrzeugnicken, d.h. einer Bewegung um die Querachse des Fahrzeugs, entgegengewirkt werden. Es wäre nun wünschenswert, die Regelfreiheitsgrade des aktiven Fahrwerkstabilisierungssystems so zu erweitern, daß beispielsweise ein einem Wankmoment entgegenwirkendes Steuermoment nicht zwingend hälftig zwischen Vorder- und Hinterachse aufgeteilt wird. Aufgrund der gewöhnlich stärkeren Belastung der Vorderachse wäre es sinnvoll, dieser Belastung auch mit einem höheren Druck entgegenzuwirken als auf der Hinterachse.

Naheliegend wäre die Verwendung von zwei separaten Steuerkreisen für die Vorderachse und die Hinterachse. Abgesehen vom wirtschaftlichen Aspekt, nämlich dem doppelten Aufwand für ein solches Fahrwerkstabilisierungssystem, spricht auch das mangelnde Platzangebot im Fahrwerk gegen eine solche Lösung. Ferner wäre eine integrierte Lösung mit einer kompakten Steuereinheit, wie in der WO 03/101768 A1 gezeigt, undenkbar.

Die gattungsgemäße EP 0 992 376 A2 offenbart ein als 2-Kanal-System ausgebildetes, aktives Fahrwerkstabilisierungssystem mit einer hydraulischen Druckversorgungseinheit, einer hydraulischen Stabilisatorbaugruppe, die einer Vorderachse zugeordnet ist, einer hydraulischen Stabilisatorbaugruppe, die einer Hinterachse zugeordnet ist, sowie einer Steuereinheit, die mit der Druckversorgungseinheit und den Stabilisatorbaugruppen in Verbindung steht.

Die Aufgabe der Erfindung ist nun die Schaffung eines aktiven Fahrwerkstabilisierungssystems, bei dem unter geringstem technischen Mehraufwand die Ansteuerung der Vorderachse von der Ansteuerung der Hinterachse entkoppelt ist, und bei dem sich im Störungsfall ein besonders vorteilhaftes Systemverhalten einstellt.

Diese Aufgabe wird durch ein aktives Fahrwerkstabilisierungssystem mit den Merkmalen des Anspruchs 1 gelöst. Über die beiden Steuerkanäle A, B kann in Verbindung mit geeigneten Hydraulikventilen die Stabilisatorbaugruppe der Hinterachse unabhängig von der Stabilisatorbaugruppe der Vorderachse angesprochen werden.

Die Steuereinheit des aktiven Fahrwerkstabilisierungssystems kann ein 8/2-Wegeventil aufweisen, das die Durchflußwege für beide Steuerkanäle bestimmt. An der prinzipiellen Abstimmung zwischen den Stabilisatorbaugruppen, d.h. also an der generellen Bewegungsrichtung der Aktuatoren in verschiedenen Fahrsituationen, hat sich gegenüber dem Stand der Technik nichts geändert. Durch das 8/2-Wegeventil kann diese prinzipielle Fahrwerkabstimmung auch für das erfindungsgemäße Zwei-Kanal-System nach wie vor mit einem Bauteil geregelt werden.

Die Steuereinheit kann zwei elektromagnetisch betätigte Vorsteuerventile zur Schaltung des 8/2-Wegeventils aufweisen. Da das komplette Fluidvolumen zur Ansteuerung der Stabilisatorbaugruppen durch das 8/2-Wegeventil strömt, ist eine direkte Schaltung dieses Ventils mit Schwierigkeiten verbunden. Für eine elektromagnetische Ansteuerung wären verhältnismäßig große Spulen notwendig, die bei ihrer Aktivierung der Fahrzeugelektrik auch eine entsprechend hohe Leistung entziehen würden. Die Vorsteuerventile weisen nur einen geringen Durchfluß auf und können dementsprechend einfach elektromagnetisch geschaltet werden. Das Ventil mit dem hohen Durchfluß wird dann über einen Druckanschluß geschaltet, den das Vorsteuerventil freigeben kann.

Die Steuereinheit kann ein Druckbegrenzungsventil aufweisen. Damit ist es möglich, unerwünscht hohe Drücke im Hydraulikkreislauf des aktiven Fahrwerkstabilisierungssystems zu vermeiden.

Das Druckbegrenzungsventil ist in einer bevorzugten Ausführungsform ein proportionales Druckbegrenzungsventil. Durch die Verwendung eines proportionalen Ventils kann dieses Ventil bereits so angesteuert werden, daß an den Stabilisatorbaugruppen genau der Druck zur Verfügung steht, der infolge der Sensordaten erforderlich ist.

Zur Ansteuerung dieses Druckbegrenzungsventils weist die Steuereinheit vorzugsweise ein elektromagnetisch betätigtes Vorsteuerventil auf. Genau wie beim oben erwähnten 8/2-Wegeventil weist auch das Druckbegrenzungsventil einen hohen Durchfluß auf. Aus den oben genannten Gründen ist daher eine Vorsteuerung sinnvoll.

Das Vorsteuerventil kann dabei ein proportionales 2/2-Wegeventil sein. Die Vorsteuerung eines proportionalen Ventils sollte sinnvollerweise ebenfalls durch ein proportionales Ventil erfolgen. Ein proportionales 2/2-Wegeventil bietet sich aufgrund seiner kleinen Baugröße an. Dieses Ventil gibt dann abhängig von der elektromagnetischen Vorsteuerung einen Druckanschluß stufenlos frei, der dann das proportionale Druckbegrenzungsventil ebenfalls stufenlos schaltet

In einer Ausführungsform steuert das Druckbegrenzungsventil das Druckniveau für die Stabilisatorbaugruppen der Vorder- und Hinterachse. Damit wird durch ein Ventil das maximal erforderliche Druckniveau für den gesamten Hydraulikkreislauf festgelegt.

Vorzugsweise weist die Steuereinheit auch ein Druckminderventil auf. Der Einbau eines solchen Druckminderventils bietet den Vorteil, daß ein festgelegter Druck im Hydraulikkreislauf, oder in Teilen davon, reduziert werden kann.

Das Druckminderventil ist in einer bevorzugten Ausführungsform ein proportionales Druckminderventil. Dies bietet den Vorteil, daß der Druck im Hydraulikkreislauf oder in den Teilen des Kreislaufs, die von dem Druckminderventil beeinflußt werden, stufenlos und bedarfsgerecht gesteuert werden kann.

Zur Ansteuerung des Druckminderventils kann ebenfalls ein elektromagnetisch betätigtes Vorsteuerventil vorgesehen sein. Auch das Druckminderventil bietet sich aufgrund des hohen Volumendurchsatzes aus oben genannten Gründen für eine Vorsteuerung an.

Das Vorsteuerventil kann ein proportionales 2/2-Wegeventil sein. Aus identischen Gründen wie für das Druckbegrenzungsventil bietet sich auch für das Druckminderventil, insbesondere für ein proportionales Druckminderventil, eine proportionale Vorsteuerung an.

In einer bevorzugten Ausführungsform steuert das Druckminderventil das Druckniveau für die Stabilisatorbaugruppe der Hinterachse. Damit tritt ein erwünschter Entkoppelungseffekt der Vorder- und Hinterachse ein. In diesem Fall könnte auschließlich das Druckniveau der Hinterachse gegenüber einem vorgegebenen Druckniveau abgesenkt werden.

Die Vorsteuerventile des Druckbegrenzungsventils und des Druckminderventils können identisch sein. Dies bietet den Vorteil, daß der Hersteller eine geringere Vielfalt an Einzelbauteilen vorhalten muß.

Die Steuereinheit des aktiven Fahrwerkstabilisierungssystems weist ein 4/2-Wegeventil auf, das ein Ausfallsicherheitsventil ist und in einer Grundstellung seine vier Anschlüsse gedämpft verbindet. Durch diese Maßnahme wird das erfindungsgemäße 2-Kanal-Fahrwerkstabilisierungssystem bei einem Systemausfall in einen definierten Zustand gebracht und das Fahrzeug weiterhin betriebsbereit gehalten.

Die Steuereinheit kann zwei elektromagnetisch betätigte Vorsteuerventile zur Schaltung dieses 4/2-Wegeventils aufweisen. Eine direkte Schaltung ist auch hier aufgrund des hohen Durchflusses schwierig. Daher übernehmen die kleinen und einfach elektromagnetisch ansteuerbaren Vorsteuerventile die Schaltfunktion für das 4/2-Wegeventil.

Das 4/2-Wegeventil kann eine Vorrichtung zur manuellen Betätigung aufweisen. Diese Funktion erleichtert die Befüllung des Hydraulikkreislaufs mit Fluid.

Vorzugsweise sind die Vorsteuerventile zur Schaltung des 8/2-Wegeventils und des 4/2-Wegeventils identisch. Da diese Ventile zusätzlich baugleich zu ABS-Ventilen in Bremssystemen sein können, wird durch diese Maßnahme die Vielfalt der vorzuhaltenden Einzelbauteile für den Hersteller geringer.

In einer Ausführungsform des aktiven Fahrwerkstabilisierungssystems weist die Steuereinheit mindestens einen Drucksensor pro Steuerkanal auf. Ein solcher Drucksensor liefert der Fahrzeugelektronik eine Rückmeldung über den anliegenden Druck im entsprechenden Steuerkanal. Die Fahrzeugelektronik kann dann den entsprechenden Ist-Druck mit einem Soll-Druck vergleichen und entsprechend reagieren.

Vorzugsweise ist ein Druck- oder Positionssensor vorgesehen, um die Schaltstellung des 8/2-Wegeventils festzustellen. Auch dies dient der Systemüberprüfung, bei der ständig Ventilstellungen, Druckverhältnisse und Sensordaten abgeglichen werden.

In einer besonders bevorzugten Ausführungsform weist die Steuereinheit wenigstens ein elektromagnetisch betätigtes Ventil auf und ein Ventilgehäuse, das alle Hydraulikventile der Steuereinheit aufnimmt und koppelt. Damit sind alle Steuereinheiten des Hydraulikkreislaufs kompakt in einem Bauteil, dem Ventilgehäuse, zusammengefaßt. Für eine Fehlersuche, Reparatur, Instandhaltung, etc. ist dies sehr vorteilhaft.

Dieses Ventilgehäuse kann zur Koppelung mit der Druckversorgungseinheit zwei Druckanschlüsse und zur Koppelung mit den Stabilisatorbaugruppen jeweils zwei Arbeitsanschlüsse aufweisen. Damit ist die komplette Hydraulik der Steuereinheit in einem kompakten Bauteil zusammengefaßt und kann durch die vorhandenen Anschlüsse bei einer Fehlfunktion sehr leicht komplett ausgetauscht werden.

In einer Ausführungsform weist die Steuereinheit eine elektronische Schaltvorrichtung auf. Hierdurch entwickelt sich die Steuereinheit zu einer Schnittstelle zwischen der Fahrzeugelektronik und der Fahrwerkhydraulik.

Die elektronische Schaltvorrichtung hat vorzugsweise einen Anschluß zur Stromversorgung und zur Aufnahme von Sensordaten. Zumeist weist die elektronische Schaltvorrichtung darüber hinaus Spulen zur Betätigung elektromagnetisch betätigter Ventile auf. Damit ist die Steuereinheit der zentrale Ort für die Sammlung und Auswertung der Sensordaten, die Umsetzung in hydraulische Steueranweisungen und die Schaltung der hydraulischen Ventile. Dies vereinfacht für Mechaniker, Werkstätten usw. die Fehlersuche erheblich.

In einer bevorzugten Ausführungsform ist die elektronische Schaltvorrichtung lösbar mit dem Ventilgehäuse verbunden. Dies erleichtert den Austausch der Elektronik, ohne in den Hydraulikkreislauf eingreifen zu müssen.

Das aktive Fahrwerkstabilisierungssystem kann maximal vier Hauptventile aufweisen, die den Volumenstrom für die Stabilisatorbaugruppen steuern. Als Hauptventile werden in diesem Zusammenhang im Gegensatz zu den Vorsteuer- oder Pilotventilen die Ventile mit hohem Volumendurchsatz bezeichnet. In der bevorzugten Ausführungsform sind diese vier Hauptventile: Ein Druckbegrenzungsventil, ein Druckminderventil, ein Ausfallsicherheitsventil und ein 8/2-Wegeventil. Damit ist der technische Aufwand gegenüber bekannten 1-Kanal-Systemen kaum gestiegen und dennoch eine Entkoppelung der Vorder- und Hinterachse möglich.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
Fig. 1a - d ein Schaltbild eines Hydraulikkreislaufs für ein erfindungsgemäßes aktives Fahrwerkstabilisierungssystem;
Fig. 2a - d drei Ausführungsvarianten eines 8/2-Wegeventils für ein erfindungsgemäßes aktives Fahrwerkstabilisierungssystem und einen schematischen Längsschnitt durch einen Linearaktuator;
Fig. 3 eine erste alternative Ausführungsform einer Stabilisatorbaugruppe;
Fig. 4 eine zweite alternative Ausführungsform einer Stabilisatorbaugruppe; und
Fig. 5 eine Perspektivansicht einer kompakt ausgebildeten Steuereinheit für ein erfindungsgemäßes aktives Fahrwerkstabilisierungssystem.

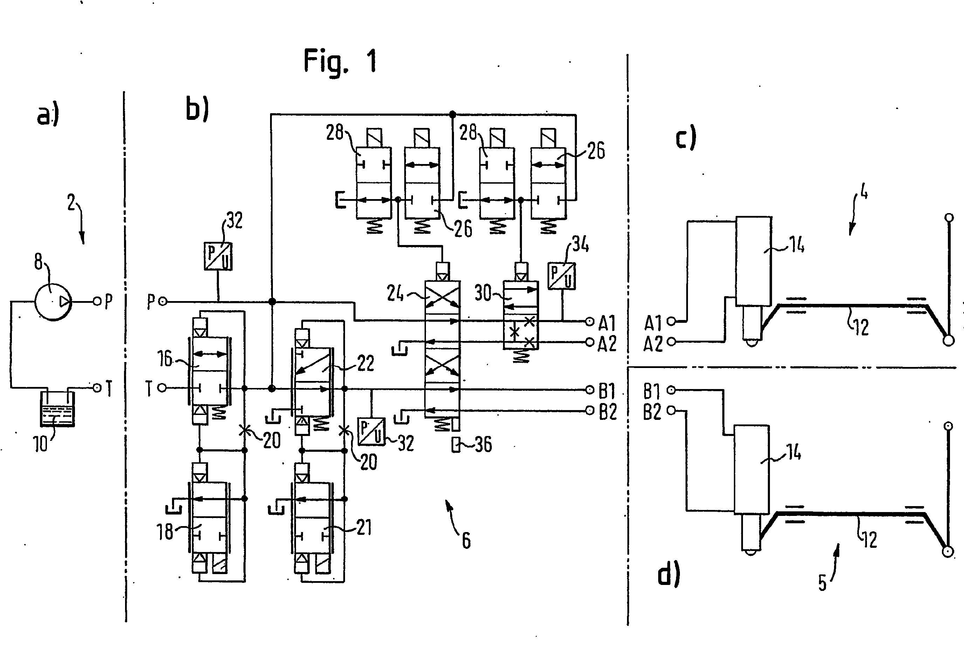

Die Fig. 1 zeigt das Schaltbild eines aktiven Fahrwerkstabilisierungssystems mit einer hydraulischen Druckversorgungseinheit 2 (Fig. 1a), einer hydraulischen Stabilisatorbaugruppe 4, die einer Vorderachse zugeordnet ist (Fig. 1c), einer hydraulischen Stabilisatorbaugruppe 5, die einer Hinterachse zugeordnet ist (Fig. 1d), und einer Steuereinheit 6 (Fig. 1b). Die hydraulische Druckversorgungseinheit 2 umfaßt eine Hydraulikpumpe 8, die über einen Druckanschluß P Hydraulikfluid in den Hydraulikkreislauf pumpt, und ein druckloses Reservoir 10, aus dem die Hydraulikpumpe 8 Fluid ansaugt, und welches über einen Druckanschluß T das Rücklauffluid des Hydraulikkreislaufs aufnimmt.

Auf der rechten Seite der Fig. 1 sind zwei Stabilisatorbaugruppen 4, 5 zu sehen. Jede Stabilisatorbaugruppe ist einer Fahrzeugachse zugeordnet und umfaßt in der Fig. 1c und 1d eine Stabilisatorstange 12 und einen Linearaktuator 14. Der Linearaktuator 14 ist eine doppelt wirkende Zylinder/Kolben-Einheit, wobei der Kolben den Zylinder in zwei Druckkammern unterteilt. Jeder Druckkammer ist ein Arbeitsanschluß zugeordnet. Die beiden Arbeitsanschlüsse einer Stabilisatorbaugruppe mit ihren entsprechenden Hydraulikleitungen werden im Folgenden auch als Steuerkanal bezeichnet.

Die Fig. 1c zeigt die Stabilisatorbaugruppe 4, die der Vorderachse zugeordnet ist, wobei deren Steuerkanal A die Arbeitsanschlüsse A1 und A2 umfaßt. Die Fig. 1d zeigt eine identische Anordnung für die Hinterachse, wobei hier der Steuerkanal B die Arbeitsanschlüsse B1 und B2 umfaßt.

Die Fig. 1b zeigt im mittleren Bereich der Fig. 1 die Steuereinheit 6 des erfindungsgemäßen aktiven Fahrwerkstabilisierungssystems. Die Steuereinheit 6 ist über die Druckanschlüsse P und T mit der Druckversorgungseinheit 2 gekoppelt und über die Arbeitsanschlüsse A1, A2, B1 und B2 mit den Stabilisatorbaugruppen 4, 5 für die Vorder- bzw. Hinterachse.

Die Steuereinheit 6 weist eine Vielzahl von Hydraulikventilen auf, die sich prinzipiell in eine Gruppe von Hauptventilen und eine Gruppe von Vorsteuerventilen aufteilen lassen. Charakteristisch für die Hauptventile ist dabei, daß sie einen hohen Durchsatz an Fluidvolumen zur aktiven Betätigung der Stabilisatorbaugruppen 4, 5 aufweisen. Infolge des großen Volumenstroms durch diese Ventile ist eine relativ große Kraft nötig, um sie zu schalten. Damit wären für eine direkte elektromagnetische Ansteuerung der Hauptventile relativ große Spulen nötig. Abgesehen von der Spulengröße würden diese Spulen zur direkten Ansteuerung der Hauptventile der Fahrzeugelektrik auch eine unerwünscht hohe Leistung entziehen. Um dies zu vermeiden, werden sogenannte Vorsteuerventile oder Pilotventile zwischengeschaltet. Die Vorsteuerventile weisen einen geringen Volumendurchsatz auf und sind somit leicht elektromagnetisch zu schalten. Das eigentliche Hauptventil wird durch Druckbeaufschlagung betätigt, wobei die Druckbeaufschlagung von den Pilotventilen gesteuert wird.

Eines der Hauptventile ist ein vorgesteuertes proportionales Druckbegrenzungsventil 16. Das Druckbegrenzungsventil 16 wird durch eine Feder so beaufschlagt, daß es in seine geschlossene Stellung bewegt wird. Zur Unterstützung der Feder kann das Ventil ferner mit Druck beaufschlagt werden, wobei die Höhe des Drucks von der Stellung eines Vorsteuerventils 18 abhängt. Weiter ist das Druckbegrenzungsventil 16 in Richtung seiner geöffneten Stellung durch den Pumpendruck der Hydraulikpumpe 8 beaufschlagt. Das Druckbegrenzungsventil 16 ist dem gesamten Hydrauliksystem der Steuereinheit 6 vorgeschaltet und reguliert somit stufenlos in Abhängigkeit von der Druckbeaufschlagung den gesamten Systemdruck, insbesondere auch den Druck an den Arbeitsanschlüssen A1, A2, B1 und B2. Das dem Druckbegrenzungsventil 16 zugeordnete Vorsteuerventil 18 ist in diesem Fall ein elektromagnetisch betätigtes proportionales 2/2-Wegeventil, das auch beidseitig mit Druck beaufschlagt werden kann. Es ist in einer Ruhestellung mit dem Reservoir 10 verbunden und kann über die elektromagnetische Betätigung in eine Sperrstellung wechseln. Bevor das Hydraulikfluid das Vorsteuerventil 18 und den Druckanschluß des Druckbegrenzungsventils 16 zur Unterstützung der Feder erreicht, durchläuft das Hydraulikfluid eine Drossel 20. Diese Drossel 20 vermindert den Durchfluß und kann letztlich für einen Druckunterschied an den Druckbetätigungsanschlüssen des Druckbegrenzungsventils 16 sorgen. Ist das Vorsteuerventil in seiner geöffneten Ausgangsstellung, so ist das Hydraulikfluid nach dem Durchlaufen der Drossel 20 drucklos. Die Feder des Druckbegrenzungsventils 16 ist alleine aber nicht stark genug, um das Druckbegrenzungsventil 16 entgegen dem anliegenden Pumpendruck in seine gesperrte Stellung zu bringen. Durch die stufenlose elektromagnetische Betätigungsmöglichkeit des Vorsteuerventils 18 kann das Vorsteuerventil 18 in eine zunehmend geschlossene Stellung gebracht werden. Damit steigt der Druck hinter der Drossel 20 und somit auch der Druck am Druckbetätigungsanschluß des Druckbegrenzungsventils 16, der die Feder unterstützt. Nun wirkt der durch das Vorsteuerventil 18 gesteuerte anwachsende Druck zusammen mit der Feder entgegen dem Pumpendruck. Somit wird das Druckbegrenzungsventil 16 zunehmend in eine Sperrstellung bewegt. Durch das proportionale Druckbegrenzungsventil 16 und das proportionale Vorsteuerventil 18 wird also letztlich ein maximales Druckniveau aller Arbeitsanschlüsse festgelegt. Diese beiden Ventile können entweder eine Baugruppe bilden oder separat in einem Ventilgehäuse untergebracht sein.

Alternativ zu den Proportionalventilen können auch nicht proportionale Ventile verwendet werden, die durch eine variable Frequenz angesteuert werden und damit den Druck auf ein vorgegebenes Niveau begrenzen können.

Recht ähnlich zu der eben beschriebenen Baugruppe aus Druckbegrenzungsventil 16 und Vorsteuerventil 18 ist eine Baugruppe, die ebenfalls aus einem Hauptventil und einem Vorsteuerventil 21 besteht. Das Hauptventil ist dabei ein proportionales Druckminderventil 22, das Vorsteuerventil 21 ist ein proportionales 2/2-Wegeventil. Das Vorsteuerventil 21 des Druckminderventils 22 ist identisch mit dem Vorsteuerventil 18 des Druckbegrenzungsventils 16; daher funktioniert die Vorsteuerung des Druckminderventils 22 analog der Vorsteuerung des Druckbegrenzungsventils 16. Diese Ventilbaugruppe aus Vorsteuerventil 21 und Druckminderventil 22 kann natürlich auch in Form von zwei separaten Ventilen eingebaut sein.

Das Druckminderventil 22 ist hinter dem Verzweigungspunkt der Steuerkanäle eingebaut, so daß es lediglich das Druckniveau des Kanals B, welcher der Hinterachse zugeordnet ist, beeinflussen kann. Aufgabe des Druckminderventils 22 ist es, den vom Druckbegrenzungsventil 16 bestimmten Systemdruck für die Stabilisatorbaugruppe der Hinterachse gegebenenfalls weiter abzumindern.

Durch das Druckbegrenzungsventil 16 und das Druckminderventil 22 ist das Druckniveau der beiden Steuerkanäle festgelegt. Über ein weiteres Hauptventil wird nun gesteuert, welcher Druckanschluß eines Steuerkanals bzw. welche Arbeitskammer des Aktuators unter Druck gesetzt werden soll. Dies ist letztlich davon abhängig, ob das Fahrzeug eine Links- oder Rechtskurve durchfährt. Diese Steuerung beider Steuerkanäle übernimmt ein einziges 8/2-Wegeventil 24. Dieses Ventil wird durch eine Feder so in seine Grundstellung beaufschlagt, daß die Arbeitsanschlüsse A1 und B1 mit der Hydraulikpumpe 8 und die Arbeitsanschlüsse A2 und B2 mit dem Reservoir 10 verbunden sind. Das 8/2-Wegeventil kann durch die Schaltung zweier Vorsteuerventile 26, 28 mit Druck beaufschlagt werden und eine Stellung einnehmen, in der A2 und B2 mit der Pumpe verbunden sind und A1 und B1 mit dem Reservoir 10. Die Vorsteuerventile 26, 28 sind jeweils 2/2-Wegeventile, die elektromagnetisch zwischen einer Sperrstellung und einer Durchflußstellung geschaltet werden. Das Vorsteuerventil 26 ist in seiner Grundstellung gesperrt, und das Vorsteuerventil 28 ist in seiner Grundstellung geöffnet. Die beiden Vorsteuerventile 26, 28 werden gleichzeitig geschaltet und verbinden dabei den Druckbetätigungsanschluß des 8/2-Wegeventils entweder mit dem drucklosen Reservoir 10 oder dem Systemdruck, der durch das Druckbegrenzungsventil 16 festgelegt ist.

Die Betätigung der beiden Vorsteuerventile 26, 28 bewirkt also lediglich eine "Ein-Aus-Stellung" bzw. eine aktivierte Stellung und eine Grundstellung des 8/2-Wegeventils 24.

Ein sogenanntes Ausfallsicherheitsventil 30 stellt ein weiteres Hauptventil der Steuereinheit 6 dar. Das Ausfallsicherheitsventil 30 ist ein vorgesteuertes 4/2-Wegeventil und wird analog dem 8/2-Wegeventil vorgesteuert, vorzugsweise mit identischen Vorsteuerventilen 26, 28. Das Ausfallsicherheitsventil 30 ist in den Steuerkanal A, welcher der Vorderachse zugeordnet ist, eingebaut. In seiner Ausgangsstellung wird dieses Ventil von einer Feder so beaufschlagt, daß es die Arbeitsanschlüsse A1, A2, den Anschluß der Hydraulikpumpe 8 und den Anschluß zum Reservoir 10 gedrosselt miteinander verbindet. Diese Stellung ist für einen Systemausfall eingerichtet und sorgt dafür, daß das aktive Fahrwerkstabilisierungssystem, gedämpft durch die Drosseln, in einen definierten Ausgangszustand zurückgebracht wird und eine gewisse passive Wirkung des Fahrwerkstabilisierungssystems erhalten bleibt. In der Regel werden allerdings die Vorsteuerventile 26, 28 des Ausfallsicherheitsventils 30 aktiviert sein und das Ausfallsicherheitsventil 30 in eine Stellung bringen, in der die Hydraulikpumpe 8 und das Reservoir 10 mit jeweils einem Arbeitsanschluß A1 oder A2 verbunden ist.

Die Vorsteuerventile 26, 28 sind in ihrer Funktion und Bauart identisch, bis auf den Unterschied, daß das Vorsteuerventil 26 in seiner Grundstellung geschlossen ist und das Vorsteuerventil 28 in seiner Grundstellung geöffnet ist. Ferner können die Vorsteuerventile 26, 28 identisch mit ABS-Ventilen eines Fahrzeugbremssystems sein.

Bei einem Ausfall der Elektronik ist das komplette Fahrwerkstabilisierungssystem über das Ausfallsicherheitsventil 30 kurzgeschlossen, d.h. der Druckanschluß P der Hydraulikpumpe 8 ist mit dem Reservoir 10 verbunden. Dieser Kurzschluß erfolgt zwar über eine im Ausfallsicherheitsventil integrierte Drossel, die allerdings einen so großen Volumenstrom ermöglicht, daß der Systemdruck auf einen minimalen "Restdruck" abfällt. Für die Stabilisatorbaugruppe 5 der Hinterachse ist dieser Restdruck unerheblich, an der Vorderachse sorgt dieser Restdruck in Verbindung mit der gedrosselten Verknüpfung der Arbeitsanschlüsse A1 und A2 für eine passive, gedämpfte Stabilisatorleistung. Der Zustand des Systems liegt zwischen einer "Sperrstellung", d.h. einer Blockade der Aktuatorkammern, und einer "Schwimmstellung", d.h. einem drosselfreien Kurzschluß der Aktuatorkammern.

Fällt das System inklusive der Hydraulikpumpe 8 aus, so ist der Hydraulikkreislauf komplett drucklos. Die Arbeitsanschlüsse A1 und A2 sind über das Ausfallsicherheitsventil nach wie vor mit einer Drossel gekoppelt. Daher bleibt für die Vorderachse auch in diesem Fall eine passive, gedämpfte Stabilisatorleistung erhalten.

Zur Überwachung des ordnungsgemäßen Betriebs des aktiven Fahrwerkstabilisierungssystems und zum Abgleichen von Sensordaten der Fahrzeugelektronik mit dem Hydraulikkreislauf ist ein Sensorsystem vorgesehen. Das Sensorsystem umfaßt zwei Drucksensoren 32, die jeweils einem Steuerkanal zugeordnet sind, und entweder einen weiteren Drucksensor 34 oder einen Positionssensor 36, der die Stellung des 8/2-Wegeventils erkennt. Bei Unstimmigkeiten der Sensordaten der Fahrzeugelektronik mit den Hydraulikdaten des Hydraulikkreislaufs bekommt der Fahrzeugführer dies durch eine Warnlampe angezeigt, und das aktive Fahrwerkstabilisierungssystem schaltet in einen sogenannten "Fail-Safe" Zustand. Dieser Zustand entspricht im wesentlichen dem Zustand bei einem Elektronikausfall, bei dem sich alle Ventile in ihrer Grundstellung befinden.

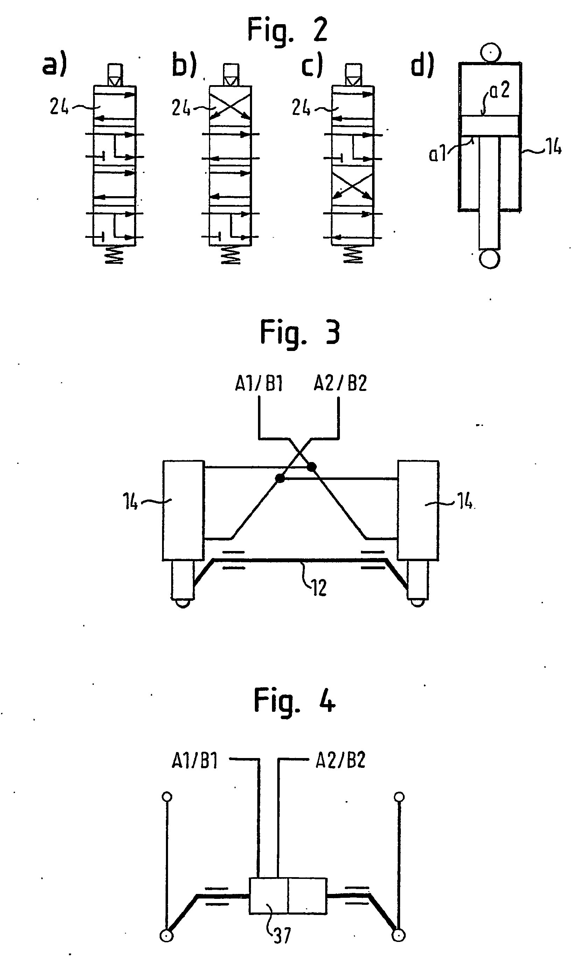

Die Fig. 1c und 1d stellen jeweils eine Stabilisatorbaugruppe 4, 5 dar, bei der jeweils ein Linearaktuator 14 einer Achse zugeordnet ist Bekannte Alternativen zu diesen Stabilisatorbaugruppen sind in den Fig. 3 und 4 gezeigt. Fig. 3 stellt eine Stabilisatorbaugruppe dar, bei der beiden Rädern einer Fahrzeugachse ein Linearaktuator 14 zugeordnet ist, wobei die Linearaktuatoren einer Achse überkreuz geschaltet sind. Fig. 4 zeigt eine weitere Ausführungsvariante einer Stabilisatorbaugruppe, bei der einer Fahrzeugachse ein Rotationsaktuator 37 oder Drehantrieb zugeordnet ist.

Entsprechend der Ausgestaltungen und Kombinationen dieser Stabilisatorbaugruppen zeigen die Fig. 2a bis c zugehörige Ausführungsvarianten des 8/2-Wegeventils 24. Die Fig. 2d zeigt einen Linearaktuator 14 schematisch im Schnitt, wobei zwei Flächen A1, A2 identifiziert sind, die für die Ausführung des 8/2-Wegeventils 24 wichtig sind. Die Fläche A2 bezeichnet dabei die Kolbenfläche, die Fläche A1 bezeichnet die Kolbenfläche abzüglich des Querschnitts der Kolbenstange.

Wird für Vorder- und Hinterachse jeweils ein Linearaktuator 14 mit einem Flächenverhältnis A1:A2 ungefähr 1:1 oder jeweils ein Rotationsaktuator 37 nach Fig. 4 verwendet, so ist das 8/2-Wegeventil 24 nach Fig. 1b einzusetzen.

Werden an beiden Achsen jeweils zwei Linearaktuatoren 14 mit einem Flächenverhältnis A1:A2 ungefähr 1:2 gemäß Fig. 3 eingesetzt, so ist das Ventil 24 nach Fig. 2a auszufahren.

Wird für die Vorderachse ein Linearaktuator 14 mit einem Flächenverhältnis A1:A2 ungefähr 1:1 oder ein Rotationsaktuator 37 gemäß Fig. 4 eingesetzt und für die Hinterachse ein Linearaktuator 14 mit einem Flächenverhältnis A1:A2 ungefähr 1:2, so ist das 8/2-Wegeventil 24 nach Fig. 2b zu verwenden.

Für den umgekehrten Fall, also wenn für die Vorderachse ein Linearaktuator 14 mit einem Flächenverhältnis A1:A2 ungefähr 1:2 und für die Hinterachse ein Linearaktuator 14 mit einem Flächenverhältnis A1:A2 ungefähr 1:1 oder einem Rotationsaktuator 37 eingesetzt wird, ist das 8/2-Wegeventil 24 nach Fig. 2c zu verwenden.

Die Unterschiede in den Ventilwegen der Figuren 2a bis 2c ergeben sich dadurch, daß der doppeltwirkende Linearaktuator 14 mit einem Flächenverhältnis A1:A2 ungefähr 1:2 wie ein einfach wirkender Linearaktuator angesteuert werden kann.

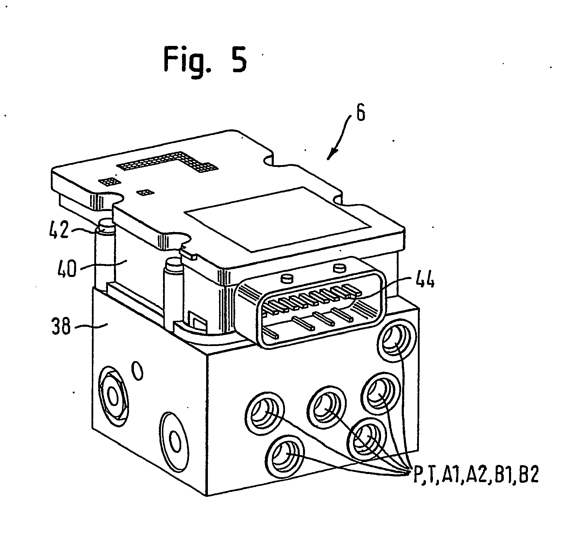

Die Fig. 5 zeigt die Steuereinheit 6 eines aktiven Fahrwerkstabilisierungssystems in einer integrierten Bauweise. Die Steuereinheit 6 umfaßt dabei ein Ventilgehäuse 38 und eine elektronische Schaltvorrichtung 40, die durch Schrauben 42 lösbar mit dem Ventilgehäuse 38 verbunden ist.

Auf der linken Seite des Ventilgehäuses 38 sind zwei eingebaute Hauptventile zu sehen. Die Öffnungen rechts sind die Druckanschlüsse P und T, sowie die Arbeitsanschlüsse A1, A2, B1 und B2.

Die elektronische Schaltvorrichtung 40 weist einen Anschluß 44 zur Stromversorgung und zur Aufnahme von Sensordaten auf. Die kleinen Vorsteuerventile 18, sowie 26 und 28 sind ebenfalls in das Ventilgehäuse 38 integriert, und zwar in der Nähe der elektronischen Schaltvorrichtung 40. In diese elektronischen Schaltvorrichtung 40 sind nämlich die Spulen zur Aktivierung der Vorsteuerventile eingebaut. Durch die lösbare Verbindung zwischen Ventilgehäuse 38 und elektronischer Schaltvorrichtung 40 kann die wartungs- und fehlerintensivere Elektronik problemlos ausgetauscht werden, ohne in den Hydraulikkreislauf eingreifen zu müssen.

Trotz der Ausbildung des aktiven Fahrwerkstabilisierungssystems als Zwei-Kanal-System ist eine kompakte Bauweise der Steuereinheit 6 möglich. Die Fehlersuche bei einem solchen aktiven Fahrwerkstabilisierungssystem beschränkt sich damit weitgehend auf ein Bauteil, in dem die Sensordaten aufgenommen und elektronisch verarbeitet werden, die elektromagnetischen Spulen die Vorsteuerventile entsprechend ansteuern, und in dem neben den Vorsteuerventilen auch alle Hauptventile integriert sind.

## Patentansprüche

1. Aktives Fahrwerkstabilisierungssystem mit
einer hydraulischen Druckversorgungseinheit (2),
einer hydraulischen Stabilisatorbaugruppe (4), die einer Vorderachse zugeordnet ist,
einer hydraulischen Stabilisatorbaugruppe (5), die einer Hinterachse zugeordnet ist, und
einer Steuereinheit (6), die ein 4/2-Wegeventil aufweist und über Druckanschlüsse (P, T) mit der Druckversorgungseinheit (2) sowie über Arbeitsanschlüsse (A1, A2, B1, B2) mit den Stabilisatorbaugruppen (4, 5) der Vorderachse und Hinterachse gekoppelt ist,
wobei das Fahrwerkstabilisierungssystem ein 2-Kanal-System ist, bei dem ein erster Kanal (A) der Stabilisatorbaugruppe (4) der Vorderachse und ein zweiter Kanal (B) der Stabilisatorbaugruppe (5) der Hinterachse zugeordnet ist,
wobei über die beiden Kanäle (A, B) die Stabilisatorbaugruppe (5) der Hinterachse unabhängig von der Stabilisatorbaugruppe (4) der Vorderachse ansprechbar ist,
wobei das 4/2-Wegeventil ein Ausfallsicherheitsventil (30) ist, das in den ersten Kanal (A) eingebaut ist,
**dadurch gekennzeichnet, dass** das Ausfallsicherheitsventil (30) in seiner Ausgangsstellung so beaufschlagt wird, dass es die Arbeitsanschlüsse (A1, A2), den Anschluss einer Hydraulikpumpe (8) und den Anschluss zu einem Reservoir (10) gedrosselt miteinander verbindet.

2. Aktives Fahrwerkstabilisierungssystem nach Anspruch 1, **dadurch gekennzeichnet, daß** die Steuereinheit (6) ein 8/2-Wegeventil (24) aufweist, das die Durchflußwege für beide Steuerkanäle bestimmt.

3. Aktives Fahrwerkstabilisierungssystem nach Anspruch 2, **dadurch gekennzeichnet, daß** die Steuereinheit (6) zwei elektromagnetisch betätigte Vorsteuerventile (26, 28) zur Schaltung des 8/2-Wegeventils (24) aufweist.

4. Aktives Fahrwerkstabilisierungssystem nach einem der vorhergehenden Ansprüche, **dadurch gekennzeichnet, daß** die Steuereinheit (6) ein Druckbegrenzungsventil (16) aufweist.

5. Aktives Fahrwerkstabilisierungssystem nach Anspruch 4, **dadurch gekennzeichnet, daß** das Druckbegrenzungsventil (16) ein proportionales Druckbegrenzungsventil ist.

6. Aktives Fahrwerkstabilisierungssystem nach Anspruch 4 oder 5, **dadurch gekennzeichnet, daß** die Steuereinheit (6) ein elektromagnetisch betätigtes Vorsteuerventil (18) zur Ansteuerung des Druckbegrenzungsventils (16) aufweist.

7. Aktives Fahrwerkstabilisierungssystem nach Anspruch 6, **dadurch gekennzeichnet, daß** das Vorsteuerventil (18) ein proportionales 2/2-Wegeventil ist.

8. Aktives Fahrwerkstabilisierungssystem nach einem der Ansprüche 4 bis 7, **dadurch gekennzeichnet, daß** das Druckbegrenzungsventil (16) das Druckniveau für die Stabilisatorbaugruppen (4, 5) der Vorder- und Hinterachse steuert.

9. Aktives Fahrwerkstabilisierungssystem nach einem der vorhergehenden Ansprüche, **dadurch gekennzeichnet, daß** die Steuereinheit (6) ein Druckminderventil (22) aufweist.

10. Aktives Fahrwerkstabilisierungssystem nach Anspruch 9, **dadurch gekennzeichnet, daß** das Druckminderventil (22) ein proportionales Druckminderventil ist.

11. Aktives Fahrwerkstabilisierungssystem nach Anspruch 9 oder 10, **dadurch gekennzeichnet, daß** die Steuereinheit (6) ein elektromagnetisch betätigtes Vorsteuerventil (21) zur Ansteuerung des Druckminderventils (22) aufweist.

12. Aktives Fahrwerkstabilisierungssystem nach Anspruch 11, **dadurch gekennzeichnet, daß** das Vorsteuerventil (21) ein proportionales 2/2-Wegeventil ist.

13. Aktives Fahrwerkstabilisierungssystem nach einem der Ansprüche 9 bis 12, **dadurch gekennzeichnet, daß** das Druckminderventil (22) das Druckniveau für die Stabilisatorbaugruppe (5) der Hinterachse steuert.

14. Aktives Fahrwerkstabilisierungssystem nach Anspruch 6 und 11, **dadurch gekennzeichnet, daß** die Vorsteuerventile (18, 21) des Druckbegrenzungsventils (16) und des Druckminderventils (22) identisch sind.

15. Aktives Fahrwerkstabilisierungssystem nach einem der vorhergehenden Ansprüche, **dadurch gekennzeichnet, daß** die Steuereinheit (6) zwei elektromagnetisch betätigte Vorsteuerventile (26, 28) zur Schaltung des 4/2-Wegeventils aufweist.

16. Aktives Fahrwerkstabilisierungssystem nach einem der vorhergehenden, **dadurch gekennzeichnet, daß** das 4/2-Wegeventil eine Vorrichtung zur manuellen Betätigung aufweist.

17. Aktives Fahrwerkstabilisierungssystem nach Anspruch 3 und Anspruch 15, **dadurch gekennzeichnet, daß** die Vorsteuerventile (26, 28) zur Schaltung des 8/2-Wegeventils (24) und des 4/2-Wegeventils identisch sind.

18. Aktives Fahrwerkstabilisierungssystem nach einem der vorhergehenden Ansprüche, **dadurch gekennzeichnet, daß** die Steuereinheit (6) mindestens einen Drucksensor (32) pro Steuerkanal aufweist.

19. Aktives Fahrwerkstabilisierungssystem nach Anspruch 2, **dadurch gekennzeichnet, daß** ein Druck- oder Positionssensor (34; 36) vorgesehen ist, um die Schaltstellung des 8/2-Wegeventils (24) festzustellen.

20. Aktives Fahrwerkstabilisierungssystem nach einem der vorhergehenden Ansprüche, **dadurch gekennzeichnet, daß** die Steuereinheit (6) wenigstens ein elektromagnetisch betätigtes Ventil aufweist und ein Ventilgehäuse (38), das alle Hydraulikventile der Steuereinheit (6) aufnimmt und koppelt.

21. Aktives Fahrwerkstabilisierungssystem nach Anspruch 20, **dadurch gekennzeichnet, daß** das Ventilgehäuse (38) zur Koppelung mit der Druckversorgungseinheit (2) zwei Druckanschlüsse (P, T) und zur Koppelung mit den Stabilisatorbaugruppen (4, 5) jeweils zwei Arbeitsanschlüsse (A1, A2, B1, B2) aufweist.

22. Aktives Fahrwerkstabilisierungssystem nach einem der vorhergehenden Ansprüche, **dadurch gekennzeichnet, daß** die Steuereinheit (6) eine elektronische Schaltvorrichtung (40) aufweist.

23. Aktives Fahrwerkstabilisierungssystem nach Anspruch 22, **dadurch gekennzeichnet, daß** die elektronische Schaltvorrichtung (40) einen Anschluß (44) zur Stromversorgung und zur Aufnahme von Sensordaten aufweist.

24. Aktives Fahrwerkstabilisierungssystem nach Anspruch 22 oder 23, **dadurch gekennzeichnet, daß** die elektronische Schaltvorrichtung (40) Spulen zur Betätigung elektromagnetisch betätigter Ventile aufweist.

25. Aktives Fahrwerkstabilisierungssystem nach Anspruch 20 und 22, **dadurch gekennzeichnet, daß** die elektronische Schaltvorrichtung (40) lösbar mit dem Ventilgehäuse (38) verbunden ist.

26. Aktives Fahrwerkstabilisierungssystem nach einem der vorhergehenden Ansprüche, **dadurch gekennzeichnet, daß** das aktive Fahrwerkstabilisierungssystem maximal vier Hauptventile aufweist, die den Volumenstrom für die beiden Stabilisatorbaugruppen (4, 5) steuern.

## Claims

1. An active chassis stabilization system comprising
a hydraulic pressure supply unit (2),
a hydraulic stabilizer assembly (4) which is associated with a front axle,
a hydraulic stabilizer assembly (5) which is associated with a rear axle, and
a control unit (6) which includes a 4/2-way valve and is coupled to the pressure supply unit (2) via pressure connections (P, T) and to the stabilizer assemblies (4, 5) via working connections (A1, A2, B1, B2) of the front axle and the rear axle,
the chassis stabilization system being a 2-channel system, in which a first channel (A) is associated with the stabilizer assembly (4) of the front axle and a second channel (B) is associated with the stabilizer assembly (5) of the rear axle,
the stabilizer assembly (5) of the rear axle being addressable independently of the stabilizer assembly (4) of the front axle via the two channels (A, B),
the 4/2-way valve being a failure safety valve (30) which is installed in the first channel (A),
**characterized in that** in its initial position, the failure safety valve (30) is acted upon such that it connects the working connections (A1, A2), the connection of a hydraulic pump (8) and the connection to a reservoir (10) with each other in a throttled manner.

2. The active chassis stabilization system according to claim 1, **characterized in that** the control unit (6) has an 8/2-way valve (24) which determines the flow-through paths for both control channels.

3. The active chassis stabilization system according to claim 2, **characterized in that** the control unit (6) has two electromagnetically actuated servo valves (26, 28) for switching the 8/2-way valve (24).

4. The active chassis stabilization system according to any of the preceding claims, **characterized in that** the control unit (6) has a pressure-limiting valve (16).

5. The active chassis stabilization system according to claim 4, **characterized in that** the pressure-limiting valve (16) is a proportional pressure-limiting valve.

6. The active chassis stabilization system according to claim 4 or 5, **characterized in that** the control unit (6) has an electromagnetically actuated servo valve (18) for driving the pressure-limiting valve (16).

7. The active chassis stabilization system according to claim 6, **characterized in that** the servo valve (18) is a proportional 2/2-way valve.

8. The active chassis stabilization system according to any of claims 4 to 7, **characterized in that** the pressure-limiting valve (16) controls the pressure level for the stabilizer assemblies (4, 5) of the front and rear axles.

9. The active chassis stabilization system according to any of the preceding claims, **characterized in that** the control unit (6) has a pressure-reducing valve (22).

10. The active chassis stabilization system according to claim 9, **characterized in that** the pressure-reducing valve (22) is a proportional pressure-reducing valve.

11. The active chassis stabilization system according to claim 9 or 10, **characterized in that** the control unit (6) has an electromagnetically actuated servo valve (21) for driving the pressure-reducing valve (22).

12. The active chassis stabilization system according to claim 11, **characterized in that** the servo valve (21) is a proportional 2/2-way valve.

13. The active chassis stabilization system according to any of claims 9 to 12, **characterized in that** the pressure-reducing valve (22) controls the pressure level for the stabilizer assembly (5) of the rear axle.

14. The active chassis stabilization system according to claim 6 and 11, **characterized in that** the servo valves (18, 21) of the pressure-limiting valve (16) and of the pressure-reducing valve (22) are identical.

15. The active chassis stabilization system according to any of the preceding claims, **characterized in that** the control unit (6) has two electromagnetically actuated servo valves (26, 28) for switching the 4/2-way valve.

16. The active chassis stabilization system according to any of the preceding claims, **characterized in that** the 4/2-way valve has a device for manual actuation.

17. The active chassis stabilization system according to claim 3 and claim 15, **characterized in that** the servo valves (26, 28) for switching the 8/2-way valve (24) and the 4/2-way valve are identical.

18. The active chassis stabilization system according to any of the preceding claims, **characterized in that** the control unit (6) has at least one pressure sensor (32) per control channel.

19. The active chassis stabilization system according to claim 2, **characterized in that** a pressure- or position sensor (34; 36) is provided, in order to establish the switching position of the 8/2-way valve (24).

20. The active chassis stabilization system according to any of the preceding claims, **characterized in that** the control unit (6) has at least one electromagnetically actuated valve and a valve housing (38) which receives and couples all hydraulic valves of the control unit (6).

21. The active chassis stabilization system according to claim 20, **characterized in that** the valve housing (38) has two pressure connections (P, T) for coupling to the pressure supply unit (2) and two working connections (A1, A2, B1, B2) each for coupling to the stabilizer assemblies (4, 5).

22. The active chassis stabilization system according to any of the preceding claims, **characterized in that** the control unit (6) has an electronic switching device (40).

23. The active chassis stabilization system according to claim 22, **characterized in that** the electronic switching device (40) has a connection (44) for the power supply and for receiving sensor data.

24. The active chassis stabilization system according to claim 22 or 23, **characterized in that** the electronic switching device (40) has coils for the actuation of electromagnetically actuated valves.

25. The active chassis stabilization system according to claims 20 and 22, **characterized in that** the electronic switching device (40) is detachably connected with the valve housing (38).

26. The active chassis stabilization system according to any of the preceding claims, **characterized in that** the active chassis stabilization system has a maximum of four main valves which control the volume flow for the two stabilizer assemblies (4, 5).

## Revendications

1. Système de stabilisation actif de châssis, comportant
une unité d'alimentation en pression (2) hydraulique,
un ensemble stabilisateur (4) hydraulique qui est associé à un essieu avant,
un ensemble stabilisateur (5) hydraulique qui est associé à un essieu arrière, et
une unité de commande (6) qui présente un distributeur à 4/2 voies et qui est couplée via des raccords de pression (P, T) à l'unité d'alimentation en pression (2) ainsi que via des raccords de travail (A1, A2, B1, B2) aux ensembles stabilisateurs (4, 5) des essieux avant et arrière,
le système de stabilisation de châssis étant un système à deux canaux dans lequel un premier canal (A) de l'ensemble stabilisateur (4) est associé à l'essieu avant et un deuxième canal (B) de l'ensemble stabilisateur (5) est associé à l'essieu arrière,
par l'intermédiaire des deux canaux (A, B) l'ensemble stabilisateur (5) de l'essieu arrière pouvant être adressé indépendamment de l'ensemble stabilisateur (4) de l'essieu avant,
le distributeur 4/2 voies étant une soupape à sécurité intégrée (30) qui est montée dans le premier canal (A),
**caractérisé en ce que** la soupape à sécurité intégrée (30) est sollicitée dans sa position initiale de telle sorte qu'elle relie les uns aux autres, avec admission réduite, les raccords de travail (A1, A2), le raccord d'une pompe hydraulique (8) et le raccord à un réservoir (10).

2. Système de stabilisation actif de châssis selon la revendication 1, **caractérisé en ce que** l'unité de commande (6) présente un distributeur à 8/2 voies (24) qui détermine les voies de passage pour les deux canaux de commande.

3. Système de stabilisation actif de châssis selon la revendication 2, **caractérisé en ce que** l'unité de commande (6) présente deux soupapes pilotes (26, 28) à actionnement électromagnétique pour commuter le distributeur à 8/2 voies (24).

4. Système de stabilisation actif de châssis selon l'une quelconque des revendications précédentes, **caractérisé en ce que** l'unité de commande (6) présente une soupape de limitation de pression (16).

5. Système de stabilisation actif de châssis selon la revendication 4, **caractérisé en ce que** la soupape de limitation de pression (16) est une soupape de limitation de pression proportionnelle.

6. Système de stabilisation actif de châssis selon la revendication 4 ou 5, **caractérisé en ce que** l'unité de commande (6) présente une soupape pilote (18) à actionnement électromagnétique pour piloter la soupape de limitation de pression (16).

7. Système de stabilisation actif de châssis selon la revendication 6, **caractérisé en ce que** la soupape pilote (18) est une soupape à 2/2 voies proportionnelle.

8. Système de stabilisation actif de châssis selon l'une des revendications 4 à 7, **caractérisé en ce que** la soupape de limitation de pression (16) commande le niveau de pression pour les ensembles stabilisateurs (4, 5) des essieux avant et arrière.

9. Système de stabilisation actif de châssis selon l'une quelconque des revendications précédentes, **caractérisé en ce que** l'unité de commande (6) présente une soupape de réduction de pression (22).

10. Système de stabilisation actif de châssis selon la revendication 9, **caractérisé en ce que** la soupape de réduction de pression (22) est une soupape de réduction de pression proportionnelle.

11. Système de stabilisation actif de châssis selon la revendication 9 ou 10, **caractérisé en ce que** l'unité de commande (6) présente une soupape de pilotage (21) à actionnement électromagnétique pour piloter la soupape de réduction de pression (22).

12. Système de stabilisation actif de châssis selon la revendication 11, **caractérisé en ce que** la soupape de pilotage (21) est une soupape à 2/2 voies.

13. Système de stabilisation actif de châssis selon l'une des revendications 9 à 12, **caractérisé en ce que** la soupape de réduction de pression (22) commande le niveau de pression pour l'ensemble stabilisateur (5) de l'essieu arrière.

14. Système de stabilisation actif de châssis selon les revendications 6 et 11, **caractérisé en ce que** les soupapes pilotes (18, 21) de la soupape de limitation de pression (16) et de la soupape de réduction de pression (22) sont identiques.

15. Système de stabilisation actif de châssis selon l'une quelconque des revendications précédentes, **caractérisé en ce que** l'unité de commande (6) présente deux soupapes pilotes (26, 28) à actionnement électromagnétique pour commuter la soupape à 4/2 voies.

16. Système de stabilisation actif de châssis selon l'une quelconque des revendications précédentes, **caractérisé en ce que** la soupape à 4/2 voies présente un dispositif d'actionnement manuel.

17. Système de stabilisation actif de châssis selon les revendications 3 et 15, **caractérisé en ce que** les soupapes pilotes (26, 28) pour la commutation de la soupape à 8/2 voies (24) et de la soupape à 4/2 voies sont identiques.

18. Système de stabilisation actif de châssis selon l'une quelconque des revendications précédentes, **caractérisé en ce que** l'unité de commande (6) présente au moins un capteur de pression (32) par canal de commande.

19. Système de stabilisation actif de châssis selon la revendication 2, **caractérisé en ce qu'**il est prévu un capteur de pression ou de position (34 ; 36) pour déterminer la position de commutation de la soupape à 8/2 voies (24).

20. Système de stabilisation actif de châssis selon l'une quelconque des revendications précédentes, **caractérisé en ce que** l'unité de commande (6) présente au moins une soupape à actionnement électromagnétique et un boîtier de soupape (38) qui reçoit et couple toutes les soupapes hydrauliques de l'unité de commande (6).

21. Système de stabilisation actif de châssis selon la revendication 20, **caractérisé en ce que** le boîtier de soupape (38) présente deux raccords de pression (P, T) pour le couplage avec l'unité d'alimentation en pression (2) et deux raccords de travail (A1, A2, 81, B2) respectifs pour le couplage aux ensembles stabilisateurs (4, 5).

22. Système de stabilisation actif de châssis selon l'une quelconque des revendications précédentes, **caractérisé en ce que** l'unité de commande (6) présente un dispositif de commutation électronique (40).

23. Système de stabilisation actif de châssis selon la revendication 22, **caractérisé en ce que** le dispositif de commutation électronique (40) présente un raccord (44) pour l'alimentation en courant et pour la réception de données de capteur.

24. Système de stabilisation actif de châssis selon la revendication 22 ou 23, **caractérisé en ce que** le dispositif de commutation électronique (40) présente des bobines pour actionner des soupapes à actionnement électromagnétique.

25. Système de stabilisation actif de châssis selon les revendications 20 et 22, **caractérisé en ce que** le dispositif de commutation électronique (40) est relié au boîtier de soupape (38) de manière amovible.

26. Système de stabilisation actif de châssis selon l'une quelconque des revendications précédentes, **caractérisé en ce que** le système de stabilisation actif de châssis présente au maximum quatre soupapes principales qui commandent le débit volumétrique pour les deux ensembles stabilisateurs (4, 5).
